# FASCICULE DE BREVET EUROPEEN

(11) **EP 1 754 362 B1**
(45) Date de publication et mention de la délivrance du brevet: **25.01.2012**
(21) Numéro de dépôt: 05773002.0
(22) Date de dépôt: 27.05.2005
(51) Int. Cl.: H04L 29/06, H04M 11/06

(54) **PROCEDE ET DISPOSITIF DE TRANSFERT D"INFORMATIONS ENTRE DEUX TERMINAUX DE TELECOMMUNICATION**
VERFAHREN UND VORRICHTUNG ZUR DATENÜBERTRAGUNG ZWISCHEN ZWEI TELEKOMMUNIKATIONSENDGERÄTEN
METHOD AND DEVICE FOR TRANSFERRING DATA BETWEEN TWO TELECOMMUNICATION TERMINALS

(30) Priorité: 10.06.2004 FR 0406299
(43) Date de publication de la demande: 21.02.2007
(73) Titulaire: FRANCE TELECOM, 75015 Paris (FR)
(72) Inventeur: LOTTIN, Philippe, F-22560 Trebeurden (FR); PAILLET, Eric, F-22730 Tregastel (FR); DAOUBEN, Jean, F-22560 Trebeurden (FR)
(74) Mandataire: Vidon, Patrice
(86) Numéro de dépôt international: PCT/FR2005/001318
(87) Numéro de publication internationale: WO 2006/005829

(56) Documents cités:
- EP-A- 0 841 796
- EP-A- 1 359 777
- US-A1- 2002 181 495
- "H.245 Control protocol for multimedia communication" ITU-T RECOMMENDATION H.245, XX, XX, juillet 2001 (2001-07), page complete, XP002228752

## Description

La présente invention concerne un procédé et un dispositif de transfert d'informations entre deux terminaux de télécommunication en communication l'un avec l'autre par l'intermédiaire d'un réseau de télécommunication, les informations étant représentatives des fonctionnalités dont dispose un terminal de télécommunication.

Les terminaux téléphoniques tels que les combinés téléphoniques ou les terminaux de visioconférence comportent aujourd'hui un grand nombre de fonctionnalités. Ces fonctionnalités sont par exemple l'affichage du numéro de téléphone de l'appelant sur un écran, l'affichage de messages comprenant du texte associé à des messages vocaux générés par des serveurs vocaux, des capacités de traitement sonores selon différents protocoles, la possibilité de restituer ou de diffuser le son sur un nombre plus ou moins important de canaux vocaux.

Dans la demande de brevet PCT WO 02/41614, est décrit un terminal téléphonique qui, en réponse à un message SAT d'activation émis par un serveur vocal, active son modem. Le modem par la suite confirme son activation en générant un message à destination du serveur vocal. Ce message de confirmation peut aussi comprendre des informations de format d'affichage ou de type de format d'affichage dans lesquelles seront reproduits des messages écrits transférés par le serveur vocal. Le modem du terminal téléphonique pendant l'émission du message de confirmation désactive le haut-parleur du terminal téléphonique pour que le message de confirmation ne soit pas audible.

Ce message de confirmation peut alors comprendre une quantité d'informations importantes et ainsi nécessiter un temps de transfert non négligeable.

Ce temps de transfert, dépendant des informations supplémentaires ajoutées au message de confirmation, est variable et génère différents problèmes.

Le serveur vocal doit, avant de transférer des informations au terminal de télécommunication, attendre un temps au moins égal au temps nécessaire au transfert, par le terminal de télécommunication, de la confirmation et d'éventuelles informations de format d'affichage ou de type de format d'affichage dans lesquelles seront reproduits des messages écrits transférés par le serveur vocal. Ce temps pénalise les autres terminaux téléphoniques accédant au serveur et qui eux ne transfèrent qu'un simple message de confirmation.

Le nombre de fonctionnalités dont disposent les terminaux de télécommunication augmentant constamment au fil des nouvelles versions de produits apparaissant sur le marché, le serveur de télécommunication doit être apte à prendre en compte tous les signaux indiquant ces fonctionnalités et leurs caractéristiques. Ceci augmente encore le temps d'attente au niveau du serveur.

Il a également été présenté dans le document « H. 245 Control protocol for multimédia communication », ITU-T RECOMMENDATION H.245, juillet 2001 (2001-07), une syntaxe et une sémantique des messages d'information des terminaux ainsi que les procédures d'utilisation de ces messages pour les négociations dans la bande en début ou en cours de communication. Ces messages portent sur les capacités d'émission et sur les capacités de réception, sur la préférence de mode du côté réception, sur la signalisation de voie logique et sur les commandes et indications. Des procédures de signalisation avec acquittement sont spécifiées pour assurer la fiabilité des communications audiovisuelles et des transmissions de données.

Malheureusement, le transfert de fonctionnalités selon cette technique comprend une quantité d'informations importantes et nécessite ainsi un temps de transfert non négligeable.

II a également été présenté dans le document US 2002/181495 un transfert d'un message (codec) d'un terminal de communication vers un autre terminal de communication, le message comprenant les caractéristiques du terminal émettant le message. Ce message est transmis via un réseau qui a la capacité de modifier les caractéristiques du message si celles-ci ne sont pas supportées par le réseau.

Cette technique n'est pas optimale en ce qu'elle ne permet pas d'éviter le transfert de fonctionnalités qui ne peuvent pas être traitées.

De plus, il a également été présenté dans le document EP 0 841 796 un transfert par un système « voice mail » d'un message d'un terminal de communication vers un autre terminal de communication, le message comprenant les caractéristiques du terminal émettant le message. Un inconvénient de cette technique est qu'ellene permet pas le transfert d'une quantité importante de fonctionnalités.

L'invention a pour but de résoudre les inconvénients de l'art antérieur en proposant un procédé et un dispositif de transfert d'informations entre deux terminaux de télécommunication en communication l'un avec l'autre par l'intermédiaire d'un réseau de télécommunication dans lequel les informations représentatives des fonctionnalités dont dispose un terminal de télécommunication sont transférées à l'autre terminal de télécommunication de manière rapide et de manière à ce que le terminal de télécommunication le plus apte à déterminer les actions à effectuer suite à l'obtention des informations représentatives des fonctionnalités dispose de ces informations.

A cette fin, selon un premier aspect, l'invention propose un procédé de transfert d'informations entre deux terminaux de télécommunication en communication l'un avec l'autre par l'intermédiaire d'un réseau de télécommunication, chaque terminal de télécommunication disposant de fonctionnalités, caractérisé en ce qu'un des terminaux de télécommunication transfère vers l'autre terminal de télécommunication, dans une trame de données, une information pour le transfert d'informations représentatives de fonctionnalités et une information indiquant si les informations représentatives des fonctionnalités transférées ou à transférer sont représentatives des fonctionnalités du terminal de télécommunication transférant la trame de données et/ou si les informations représentatives des fonctionnalités à transférer sont représentatives des fonctionnalités du terminal de télécommunication recevant la trame de données.

Corrélativement, l'invention concerne un terminal de télécommunication en communication avec un autre terminal de télécommunication par l'intermédiaire d'un réseau de télécommunication, chaque terminal de télécommunication disposant de fonctionnalités, caractérisé en ce que le terminal de télécommunication comporte des moyens de transfert vers l'autre terminal de télécommunication, dans une trame de données, d'une information pour le transfert d'informations représentatives de fonctionnalités et d'une information indiquant si les informations représentatives des fonctionnalités transférées ou à transférer sont représentatives des fonctionnalités du terminal de télécommunication transférant la trame de données et/ou si les informations représentatives des fonctionnalités à transférer sont représentatives des fonctionnalités du terminal de télécommunication recevant la trame de données.

Ainsi, en insérant dans une trame de données une information pour le transfert d'informations représentatives de fonctionnalités et une information indiquant si les informations sont représentatives des fonctionnalités du terminal de télécommunication transférant la trame de données ou recevant la trame de données, le terminal de télécommunication le plus apte à déterminer les actions à effectuer suite à l'obtention des informations représentatives des fonctionnalités dispose de ces informations.

Ainsi, un terminal de télécommunication tel qu'un serveur du réseau de télécommunication, en communication avec un terminal de télécommunication tel qu'un combiné téléphonique, peut, en insérant dans la trame de données une information indiquant que les informations représentatives des fonctionnalités à transférer sont représentatives des fonctionnalités du terminal de télécommunication recevant la trame de données, obtenir les fonctionnalités du combiné téléphonique et effectuer des traitements en fonctions des informations obtenues. Au contraire, si le serveur du réseau de télécommunication est surchargé, celui-ci peut insérer dans la trame de données une information indiquant que les fonctionnalités transférées sont représentatives de ses fonctionnalités. Le combiné téléphonique prendra alors en charge le traitement de ces informations de fonctionnalités en évitant ainsi une surcharge plus importante du serveur. Lorsque par exemple deux combinés téléphoniques sont en communication, l'insertion d'une information indiquant que les informations représentatives des fonctionnalités transférées sont représentatives des fonctionnalités du terminal de télécommunication transférant la trame de données et les informations représentatives des fonctionnalités à transférer sont représentatives des fonctionnalités du terminal de télécommunication recevant la trame de données permet aux deux combinés téléphoniques de recevoir ces informations et d'être aptes à traiter celles-ci.

Selon un autre aspect de l'invention, la trame de données est une trame de données conforme au protocole V23.

Selon un autre aspect de l'invention, la trame de données est constituée d'un premier octet dont la valeur est représentative d'une information pour le transfert d'informations représentatives de fonctionnalités, d'un second octet dont la valeur est représentative de la taille d'au moins une partie de la trame de données et d'un troisième octet dont la valeur est représentative de l'information indiquant si les informations représentatives des fonctionnalités transférées ou à transférer sont représentatives des fonctionnalités du terminal de télécommunication transférant la trame de données et/ou si les informations représentatives des fonctionnalités à transférer sont représentatives des fonctionnalités du terminal de télécommunication recevant la trame de données.

Ainsi, la trame de données est relativement courte permettant ainsi de réduire le temps de transmission des informations.

Selon un autre aspect de l'invention, si les informations sont représentatives des fonctionnalités du terminal de télécommunication transférant la trame de données, la trame de données comporte en outre des octets dont les valeurs sont représentatives des fonctionnalités du terminal de télécommunication.

Ainsi, en transférant, dans une unique trame de données, les informations représentatives des fonctionnalités d'un terminal de télécommunication, il est possible de réduire le temps nécessaire au transfert de telles informations.

Selon un autre aspect de l'invention, si les informations représentatives des fonctionnalités à transférer sont représentatives des fonctionnalités du terminal de télécommunication recevant la trame de données, le terminal de télécommunication recevant la trame de données transfère une trame de données comprenant les fonctionnalités du terminal de télécommunication recevant la trame de données.

Selon un autre aspect de l'invention, les fonctionnalités sont des fonctionnalités de traitement de messages écrits et/ou de composition automatique d'au moins un numéro de téléphone et/ou de modification du signal audio reçu par le terminal de télécommunication et/ou de traitement de messages de service et/ou d'appartenance à une classe prédéterminée de terminaux de télécommunication et/ou de traitement de cartes de visite électroniques et/ou de synchronisation du répertoire de correspondants du terminal de télécommunication avec un autre répertoire de correspondants distant.

Selon un autre aspect de l'invention, le réseau de télécommunication est un réseau téléphonique commuté et les terminaux de télécommunication sont des combinés téléphoniques ou un des terminaux de télécommunication est un serveur du réseau de télécommunication.

L'invention concerne aussi un signal transmis sur un réseau de télécommunication par un terminal de télécommunication en communication avec un autre terminal de télécommunication, chaque terminal de télécommunication disposant de fonctionnalités, caractérisé en ce que le signal comporte une information pour le transfert d'informations représentatives de fonctionnalités et une information indiquant si les informations représentatives des fonctionnalités transférées ou à transférer sont représentatives des fonctionnalités du terminal de télécommunication transférant la trame de données et/ou si les informations représentatives des fonctionnalités à transférer sont représentatives des fonctionnalités du terminal de télécommunication recevant la trame de données.

Les avantages du signal étant identiques à ceux mentionnés pour les procédés et dispositifs, ceux-ci ne seront pas rappelés.

L'invention concerne aussi le programme d'ordinateur stocké sur un support d'informations, ledit programme comportant des instructions permettant de mettre en oeuvre le procédé précédemment décrit, lorsqu'il est chargé et exécuté par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente un système de télécommunication dans lequel un terminal de télécommunication est en communication avec un autre terminal de télécommunication selon l'invention ;
la Fig. 2 représente une vue schématique du terminal de télécommunication selon l'invention ;
la Fig. 3 représente l'algorithme exécuté par le terminal de télécommunication selon l'invention lorsque celui-ci reçoit un signal bifréquence;
la Fig. 4 représente l'algorithme exécuté par le terminal de télécommunication selon l'invention lorsque celui-ci transmet une trame de données comprenant des informations représentatives des fonctionnalités dont il dispose;
la Fig. 5 représente l'algorithme exécuté par le terminal de télécommunication selon l'invention lorsque celui-ci transmet un signal bifréquence;
la Fig. 6 représente une table comprenant les différents éléments d'une trame de données V23 émise selon l'invention par un terminal de télécommunication;
la Fig. 7 représente une table résumant les informations représentatives des différentes fonctionnalités incluses dans la trame de données V23 de la Fig. 6.

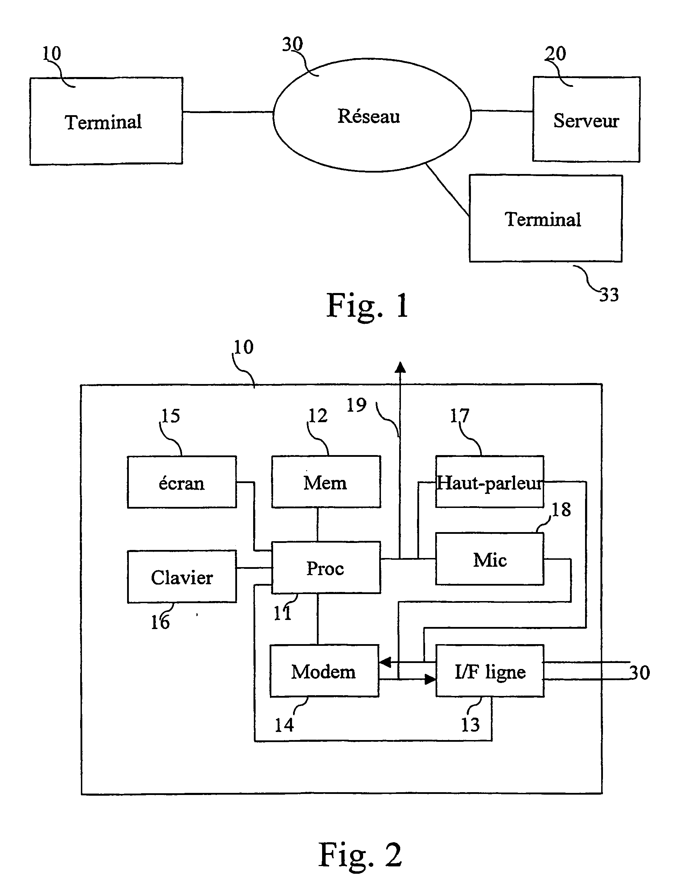

La Fig. 1 représente un système de télécommunication dans lequel un terminal de télécommunication est en communication avec un autre terminal de télécommunication selon l'invention.

Dans le réseau de télécommunication de la Fig. 1, un terminal de télécommunication 10 est apte à communiquer par l'intermédiaire d'un réseau de télécommunication 30 avec un autre terminal de télécommunication 20 ou 33. Les terminaux de télécommunication 10 et 33 sont par exemple des combinés téléphoniques. Le terminal de télécommunication 20 est par exemple un serveur 20 du réseau de télécommunication. Les terminaux de télécommunication 10 et 33 sont en variante des systèmes de visioconférence.

Le réseau de télécommunication 30 est par exemple un Réseau Téléphonique Commuté RTC. Le réseau 30 peut être aussi un réseau de type RNIS (Réseau Numérique à Intégration de Service) ou un réseau de communication téléphonique cellulaire tel qu'un réseau de type GSM (Global System for Mobile communications), UMTS (Universal Mobile Télécommunications System), GPRS (General Packet Radio Services), etc.

Selon l'invention, les terminaux de télécommunication 10, 20 sont aptes à s'interroger pour obtenir des informations représentatives de leurs fonctionnalités respectives et/ou se transférer dans une trame de données des informations représentatives de leurs fonctionnalités respectives. Le terminal de télécommunication 10 ou 33 est aussi apte à interroger le serveur 20 pour obtenir les fonctionnalités dont dispose le serveur 20 et/ou à transférer dans une trame de données au serveur 20 des informations représentatives des fonctionnalités dont dispose le terminal de télécommunication. Le serveur 20 est aussi apte à interroger un terminal de télécommunication 10 ou 33 pour obtenir les fonctionnalités dont dispose le terminal de télécommunication 10 ou 33 et/ou à transférer dans une trame de données au terminal de télécommunication 10 ou 33 des informations représentatives des fonctionnalités dont dispose le serveur 20.

Le serveur 20 est par exemple un serveur vocal qui diffuse des messages écrits associés à des messages vocaux à travers le réseau 30.

Par messages vocaux, on entend des séquences sonores comprenant des enregistrements de voix humaine obtenus par enregistrement de la voix d'une personne ou par synthèse vocale. Par messages écrits, on entend des données adaptées à être visualisées par exemple sous un écran sous forme de caractères alphanumériques.

Le serveur 20, comme par exemple un serveur Audiotel de la société France Télécom, est accessible par l'intermédiaire d'un réseau téléphonique public de la société France Télécom dans lequel il est identifié de manière classique par un numéro de téléphone. Le serveur 20 comprend un moyen d'interface adapté à interpréter des commandes DTMF (Dual Tone Modulation Frequency) ou fréquences vocales générées par la manipulation des touches du clavier d'un terminal téléphonique 10 et/ou de commandes vocales. Le serveur 20 communique avec l'appelant à l'aide de messages vocaux. Le serveur 20 associe en outre aux messages vocaux des messages écrits.

Ces messages écrits sont transférés préalablement à l'envoi du message vocal pour être décodés par le terminal de télécommunication 10 et reproduits sur un moyen d'affichage. Le serveur 20 est apte à former des messages écrits qui sont adaptés aux caractéristiques du terminal de télécommunication. Ces caractéristiques sont par exemple la taille de l'écran du terminal de télécommunication 10.

Dans un autre mode de réalisation, le serveur 20 est un serveur apte à mémoriser le dernier numéro de téléphone d'un appelant, voire son identité, ayant essayé de joindre le terminal de télécommunication 10. Le serveur 20 peut aussi mémoriser un nombre plus important de numéros de téléphone d'appelants ayant joint ou essayé de joindre le terminal de télécommunication 10.

En variante, le serveur 20 est un serveur de renseignements téléphoniques qui, lors d'interrogations vocales du terminal de télécommunication 10, lui transfère un renseignement tel que le numéro de téléphone que le terminal de communication 10 souhaite joindre.

Selon une autre variante, le serveur 20 est un serveur comportant un répertoire de numéros de téléphone associé au terminal de communication 10.

Selon une autre variante, le serveur 20 génère un signal de commande d'appel à destination du terminal de télécommunication 10 et transfère au terminal de télécommunication 10 un ou plusieurs numéros de téléphone tels que ceux précédemment mentionnés pour que celui-ci compose automatiquement ce ou ces numéros de téléphone et établisse une communication téléphonique avec le ou les correspondants ayant ce ou ces numéros de téléphone.

Selon une autre variante, le serveur 20 est un serveur mémorisant le répertoire de coordonnées des correspondants de l'utilisateur du terminal de télécommunication 10. Le serveur 20 transfère aussi des informations pour la mise à jour du répertoire de coordonnées des correspondants de l'utilisateur du terminal de télécommunication 10. Le serveur 20 est apte à effectuer la mise à jour du répertoire de coordonnées des correspondants de l'utilisateur mémorisé dans le terminal de télécommunication 10. Les informations pour la mise à jour du répertoire de coordonnées sont par exemple transmises sous la forme de messages courts tels que des messages de service SMS, des messages EMS ou des messages MMS. La mise à jour est effectuée par l'intermédiaire d'un serveur de messages courts SMSC et d'un commutateur de transit CTS du réseau de télécommunication 30.

Le serveur SMSC, non représenté en Fig. 1 est un serveur qui délivre des messages sous forme de messages courts à des terminaux de télécommunication. SMSC est l'abréviation des termes anglo-saxons Short Message Service Centre.

L'échange des données entre le serveur 20 et le serveur SMSC est réalisé par exemple conformément au protocole UCP (Universal Computer Protocol) ou au protocole SMPP acronyme de Short Message Peer to Peer ou protocole de messages courts d'homologue à homologue.

L'échange des données entre le serveur SMSC et le commutateur de transit non représenté en Fig. 1 est effectué selon un protocole d'échange entre commutateurs d'un réseau de télécommunication de type SS7 (système de signalisation numéro 7) ou SSUR (Sous-Système Utilisateur pour le RNIS du Système de signalisation N° 7).

Un message EMS, abréviation des termes anglo-saxons Enhanced Message Service, est un message de service qui comporte des séquences d'images ou de la musique et peut entre autres inclure des cartes de visite électroniques de type vCard.

Un message MMS abréviation des termes anglo-saxons Multimedia Message Service, est un message de service qui peut comporter des séquences d'images vidéo ou de la musique.

Ces messages courts comprennent les coordonnées d'autres terminaux de télécommunication du réseau de télécommunication 30 compris par exemple dans le répertoire de l'utilisateur du terminal de télécommunication 10 et mémorisé dans le serveur 20. Ces coordonnées sont préférentiellement mémorisées sous forme de cartes de visite électroniques dans un format conforme au standard vCard. Le standard vCard acronyme de " The Electronic Business Card" est une spécification issue du consortium Versit. La version actuelle est la version 3 issue en septembre 1998. Cette spécification définit un format de carte de visite électronique pour l'échange de données entre des applications ou des systèmes.

Le terminal de télécommunication 10 ou 33 est un terminal de télécommunication apte à recevoir, décoder et reproduire sur un écran des messages écrits transférés par le serveur 20. Le terminal de télécommunication 10 ou 33 est aussi apte à transférer des informations représentatives de la taille de l'écran du terminal de télécommunication 10.

Le terminal de télécommunication 10 ou 33 comporte en variante une fonctionnalité d'amélioration de la qualité audio du signal reproduit. Le terminal de télécommunication 10 ou 33 comporte une liaison stéréophonique permettant de connecter un casque stéréophonique au terminal de télécommunication 10. Les signaux transmis sur la liaison stéréophonique sont traités de manière à recréer par exemple un effet Surround.

Dans une autre variante, le terminal de télécommunication 10 est apte à détecter dans un signal transmis par le serveur 20, un signal d'appel de commande, à mémoriser le numéro ou les numéros de téléphone reçus, à se déconnecter du réseau de télécommunication 30 suite à la détection du signal d'appel de commande, à se connecter au réseau de télécommunication 30 suite à la déconnexion et à composer automatiquement le ou les numéros mémorisés pour établir une communication téléphonique avec le ou les correspondants ayant ce ou ces numéros de téléphone.

Dans une autre variante, le terminal de télécommunication 10 est apte à synchroniser le répertoire téléphonique qu'il mémorise avec le répertoire téléphonique mémorisé dans le serveur 20. Les messages courts sont par exemple des messages de service SMS, des messages EMS ou des messages MMS. Il est à remarquer ici que préférentiellement, les coordonnées transférées lors de la synchronisation sont sous la forme de cartes de visite électroniques de type vCard.

La Fig. 2 représente une vue schématique du terminal de télécommunication selon l'invention.

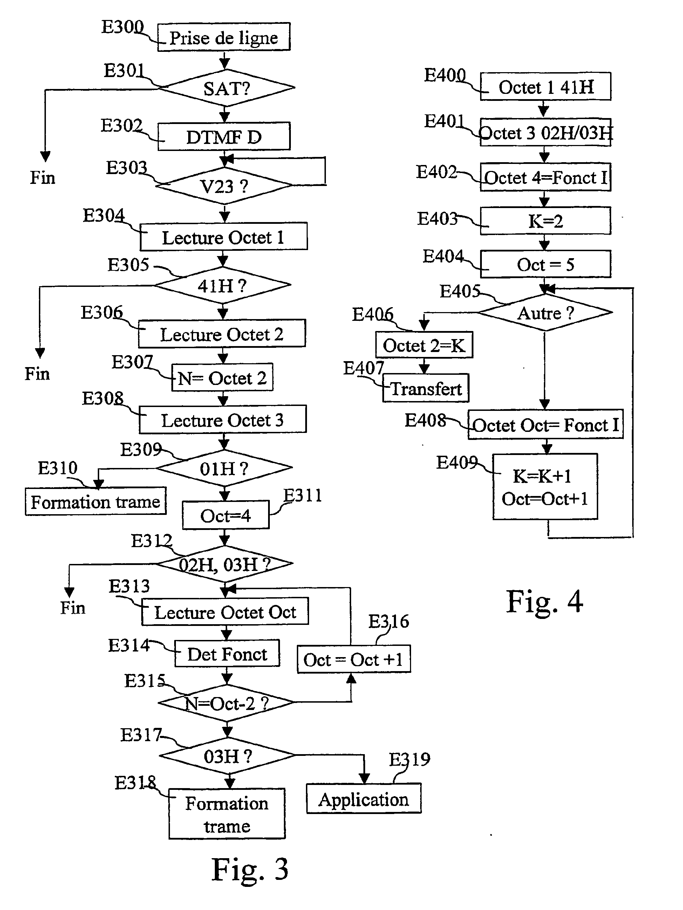

Le terminal de télécommunication 10 ou 33 est par exemple un combiné téléphonique comportant un processeur 11 relié à une mémoire 12, un écran 15, un clavier 16, un moyen de détection/génération de trames V23 et de signaux DTMF 14 (Dual Tone Modulation Frequency), une interface ligne 13 ainsi qu'à un haut-parleur 17 et un microphone 18. La mémoire 12 mémorise le programme mettant en oeuvre le procédé selon l'invention qui sera décrit en détail en référence aux Figs. 3, 4 et 5.

Les terminaux de télécommunication 10 et 33 étant similaires, seul le terminal de télécommunication 10 sera décrit par la suite.

Le processeur 11 exécute les instructions des programmes correspondant aux algorithmes qui seront décrits ultérieurement en regard des Figs. 3, 4 et 5. Le processeur 11 contrôle l'interface ligne 13, l'écran 15, le clavier 16, le moyen de détection/génération de trames V23 et de signaux DTMF 14. Le processeur 11 contrôle aussi l'activation/désactivation du haut-parleur 17 et du microphone 18.

Le processeur 11 est apte à traiter les signaux vocaux reçus du réseau de télécommunication 30 de manière à améliorer la qualité audio du signal reproduit. Le terminal de télécommunication 10 comporte une liaison stéréophonique 19 permettant de connecter un casque stéréophonique au terminal de télécommunication 10. Les signaux transmis sur la liaison stéréophonique sont traités par le processeur 11 qui, à partir des signaux reçus du réseau de télécommunication 30 recrée par exemple un effet de spatialisation tel que l'effet "Surround". Le processeur 11 est, par exemple et de manière non limitative, apte à coder, décoder des signaux vocaux conformes à la recommandation G722 de l'UIT (Union Internationale Télécommunication) à une fréquence d'échantillonnage de 7 KHz et à un débit 56Kbit/s.

Le clavier 16 et l'écran 15 assurent l'interface homme machine avec l'utilisateur. Par l'intermédiaire de l'écran 15, le processeur 11 affiche la ou les fonctionnalités dont dispose le terminal de télécommunication 20 ou 33 en communication avec le terminal de télécommunication 10. Le clavier 16 permet à l'utilisateur du terminal de télécommunication 10 de composer le numéro de téléphone du terminal de télécommunication 20 ou 33, voire d'accepter un fonctionnement du terminal de télécommunication 10 selon une fonctionnalité prédéterminée. Le terminal de télécommunication 10 dispose par exemple de la fonctionnalité texte. Il dispose en effet d'un écran 15.

Le terminal de télécommunication 10 comporte une interface ligne 13 adaptée au réseau de télécommunication 30. L'interface ligne 13 comporte entre autres au moins un relais commandé par le processeur 11 permettant la connexion ou la déconnexion du terminal de télécommunication 10 au réseau 30, au moins un transformateur permettant d'isoler le terminal de télécommunication 10 du réseau de télécommunication 30 et au moins un circuit convertisseur 2 fils 4 fils permettant la séparation des signaux entrants et sortants.

Le terminal de télécommunication 10 comporte aussi un microphone 18 et un haut-parleur 17 classiques.

Il est à remarquer que le haut-parleur 17 et le microphone 18 peuvent être désactivés par le processeur 11 lors de la réception et/ou la génération de signaux DTMF ou lors de la réception de trames de données V23 selon l'invention.

Le terminal de télécommunication 10 composte aussi un moyen de détection/génération de trames V23 et de signaux DTMF 14. Ce moyen de détection/génération de trames V23 et de signaux DTMF 14 est par exemple un modem ou un DSP (Digital Signal Processor). Le moyen de détection/génération de trames V23 et de signaux DTMF 14 (Dual Tone Modulation Frequency) est apte à détecter, décoder des signaux conformes aux règles définies dans le protocole de transmission V23 normalisé à L'ETSI (European Telecommunication Standards Institute) et décrit dans le document ETSI EN 300 659-2 intitulé Public Switched Telephone Network (PSTN) : Subscriber line protocol over the local loop for display and related services- Part 2 : Off-hook data transmission et le document ETSI EN 300 659-3 intitulé Access and Terminals (AT) ; Analogue access to the Public Switched Telephone Network (PSTN) : Subscriber line protocol over the local loop for display and related services- Part 3 : Data link message and parameter.

Par l'intermédiaire de l'interface ligne 13 et des moyens de détection/génération de trames V23 et de signaux DTMF 14, le terminal de télécommunication 10 est apte à détecter dans un signal transmis par le serveur 20, un signal d'appel de commande et un numéro de téléphone, à se déconnecter du réseau de télécommunication 30 suite à la détection du signal d'appel de commande, à se connecter au réseau de télécommunication 30 suite à la déconnexion et à composer automatiquement le numéro de téléphone reçu pour établir une communication téléphonique avec le terminal de télécommunication ayant le numéro de téléphone détecté.

Les moyens de détection/génération de trames V23 et de signaux DTMF 14 sont aptes à générer des signaux d'activation de transfert de messages courts sur le réseau de télécommunication 30 tels que des trames de données modulées selon une modulation de type FSK (Frequency Shift Keying) à 1200 bits par seconde. Les moyens de détection/génération de trames V23 et de signaux DTMF 14 sont aptes aussi à échanger des données conformément au protocole UBS1 ou UBS2 abréviations des termes anglo-saxons User Based Solution décrits dans la norme de l'ETSI EN 201 912 intitulée Access and Terminals (AT) ; Short Message Service (SMS) for PSTN/ISDN ; Short Message Communication between a fixed network Short Message Terminal Equipment and a Short Message Service Centre.

Les protocoles UBS1 et UBS2 fournissent un service fiable garantissant un transfert correct de messages courts tels que des messages SMS et permettent à l'utilisateur ayant émis le message de vérifier si celui-ci a été correctement reçu par le destinataire dudit message. Le protocole UBS1 a l'avantage d'être un protocole compatible avec le service de fourniture de messages SMS du réseau GSM (Global System for Mobile communication). Le protocole UBS2 a l'avantage d'être particulièrement adapté à un réseau de télécommunication filaire fixe tel que le réseau RTC ou RNIS.

Le processeur 11 et les moyens de détection/génération de trames V23 et de signaux DTMF 14 implémentent les algorithmes tels que décrits dans les annexes A et B de la norme de l'ETSI EN 201 912 intitulée Access and Terminals (AT) ; Short Message Service (SMS) for PSTN/ISDN; Short Message Communication between a fixed network Short Message Terminal Equipment and a Short Message Service Centre.

Préférentiellement, seules les parties des diagrammes de séquences des annexes A et B comprises entre les marqueurs « Connection Manager initiates connection » et « Connection Manager deletes connection » sont effectuées par le processeur 11 et les moyens de détection/génération de trames V23 et de signaux DTMF 14.

Il est à remarquer que lorsque le terminal de télécommunication est un serveur 20, le serveur 20 comporte entre autres de la même manière que le terminal de télécommunication 10 précédemment décrit, un processeur relié à une mémoire et un moyen de détection/génération de trames V23 et de signaux DTMF 14 (Dual Tone Modulation Frequency), une interface ligne.

La Fig. 3 représente l'algorithme exécuté par le terminal de télécommunication lorsque celui-ci reçoit un signal bifréquence.

Le présent algorithme décrit le fonctionnement d'un terminal de télécommunication 10 ou 33 lorsque celui-ci est un combiné téléphonique. Bien entendu, le présent algorithme est aussi exécuté par le terminal de télécommunication 10 ou 33 lorsque celui-ci est un dispositif de visiophonie.

Lorsque le terminal de télécommunication est un serveur 20, le serveur 20 exécute de manière similaire l'algorithme de la Fig. 3.

A l'étape E300, l'utilisateur du terminal de télécommunication 10 décroche son combiné et compose par exemple le numéro de téléphone du serveur 20. Le processeur 11 génère alors une commande à destination de l'interface ligne 13 pour que celle-ci prenne la ligne, et le processeur 11 génère une commande à destination du moyen de détection/génération de trames V23 et de signaux DTMF 14 pour que celui-ci compose le numéro de téléphone. Ce numéro de téléphone est alors transmis au réseau de télécommunication 30 et le terminal de télécommunication 10 est mis en communication avec le serveur 20.

Ces opérations effectuées, le processeur passe ensuite à l'étape E301 et vérifie si le moyen de détection/génération de trames V23 et de signaux DTMF 14 a reçu du réseau de télécommunication 30 un signal SAT généré par le serveur 20. Ce signal SAT est un signal bifréquence (2130Hz et 2750 Hz) qui est transmis sur un temps TSAT compris entre 80 et 85 millisecondes (ms).

Si aucun signal SAT n'est reçu, cela implique que le serveur 20 en communication avec le terminal de télécommunication 10 ne comporte pas de modems de type V23. Le processeur 11 arrête alors l'algorithme.

Si un signal SAT est reçu du réseau de télécommunication 30, le processeur 11 passe à l'étape E302 et génère une commande à destination du moyen de détection de trames V23 et de génération de signaux DTMF 14pour que celui-ci génère le signal DTMF représentatif de la lettre D. Ce signal a pour fonction d'informer le serveur 20 que le signal SAT a bien été reçu et que le modem de détection de trames V23 est bien activé.

Cette opération effectuée, le processeur 11 passe à l'étape E303 qui est une boucle d'attente de la réception et du décodage, par le moyen de détection 14 de trames V23 et de génération de signaux DTMF, d'une trame de données V23. La trame de données décodée est ensuite analysée par le processeur 11.

Le processeur 11 à l'étape E304 lit le premier octet de la trame de données reçue.

A l'étape suivante E305, le processeur 11 vérifie si le premier octet de cette trame de données est égal à la valeur 41H en hexadécimal. Cette valeur 41H correspond à une information pour le transfert d'informations représentatives de fonctionnalités d'un terminal de télécommunication. Si la trame de données décodée ne comporte pas cette valeur, c'est une trame de données V23 représentative d'informations non traitées par la présente invention. Le processeur 11 termine alors l'algorithme.

Si le premier octet de cette trame de données est égal à la valeur 41H en hexadécimal, le processeur 11 continue l'analyse de la trame de données, et à l'étape E306 lit le second octet de la trame de données reçue.

Le processeur 11 met à l'étape E307 la variable N à la valeur du second octet. Le second octet définit la longueur des paramètres compris dans la trame de données, en l'occurrence le nombre d'octets de la trame de données V23 situés après le second octet.

Cette opération effectuée, le processeur 11 passe à l'étape E308 et lit le troisième octet de la trame de données reçue.

A l'étape suivante E309, le processeur 11 vérifie si le troisième octet de cette trame de données est égal à la valeur 01H en hexadécimal. Cette valeur 01H correspond à une requête pour l'obtention des fonctionnalités dont dispose le terminal de télécommunication 10.

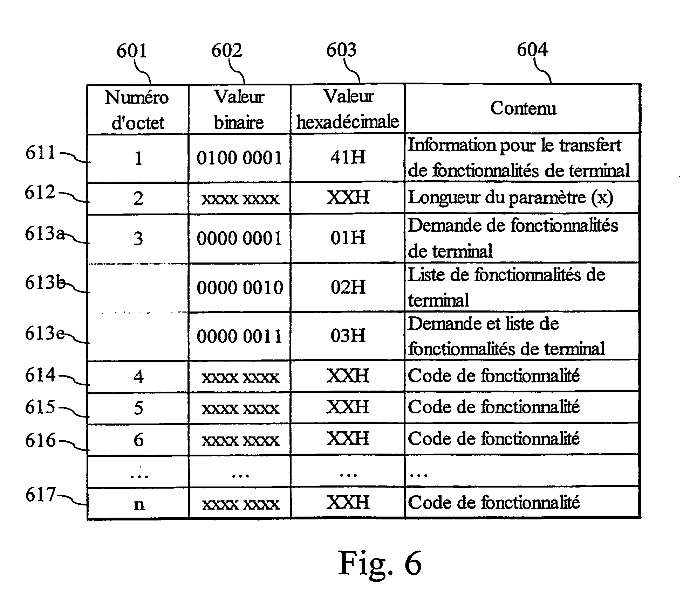

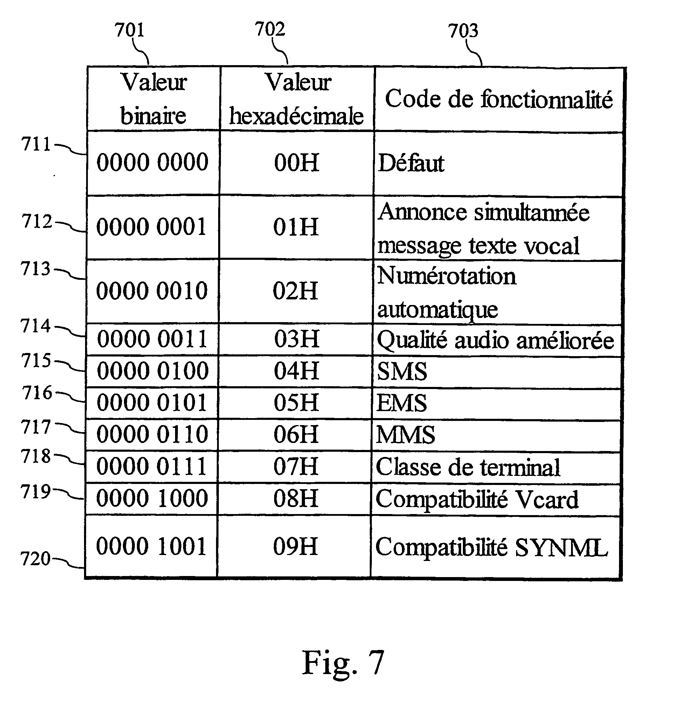

Dans l'affirmative, le processeur 11 passe à l'étape E310 qui consiste à former une trame de données comprenant les caractéristiques du terminal de télécommunication et à transférer celle-ci. L'étape E310 sera décrite plus en détail en regard de la Fig. 4. La trame de données est formée conformément aux tableaux des Figs. 6 et 7 qui seront décrites ultérieurement. Lorsque la trame de données formée est transmise, le processeur 11 arrête le présent algorithme.

Si le troisième octet de cette trame de données est différent de la valeur 01H en hexadécimal, le processeur 11 passe à l'étape E311 et met la variable Oct à la valeur 4. La variable Oct représente la position dans la trame de données de l'octet à lire.

Cette opération réalisée, le processeur 11 vérifie à l'étape E312 si le troisième octet de cette trame de données est égal à la valeur 02H ou 03H en hexadécimal. La valeur 02H indique que la trame de données transmise par le serveur 20 ou le terminal de télécommunication 33 comprend la liste des fonctionnalités dont dispose le serveur 20 ou le terminal de télécommunication 33. La valeur 03H indique que la trame de données transmise par le serveur 20 ou le terminal de télécommunication 33, comprend la liste des fonctionnalités dont dispose le serveur 20 ou le terminal de télécommunication 33 ainsi qu'une requête pour l'obtention des fonctionnalités dont dispose le terminal de télécommunication 10.

Si le troisième octet ne correspond pas à la valeur 02H ou 03H en hexadécimal, le processeur 11 arrête le présent algorithme.

Si le troisième octet correspond à la valeur 02H ou 03H, le processeur 11 passe à l'étape suivante E313.

A cette étape, le processeur 11 lit l'octet de la trame de données ayant la position égale à la variable Oct.

A l'étape suivante E314, le processeur 11 détermine la fonctionnalité associée à l'octet lu à l'étape précédente. La fonctionnalité associée est déterminée à l'aide de la table telle que représentée en Fig. 7 et mémorisée dans la mémoire 12 du terminal de télécommunication 10.

Cette opération effectuée, le processeur 11 passe à l'étape suivante E315 et vérifie si la variable N est égale à la variable Oct minorée de deux unités. Par cette vérification, le processeur 11 est apte à déterminer si le terminal de télécommunication 33 ou le serveur 20 dispose d'autres fonctionnalités.

Dans la négative, le processeur 11 passe à l'étape E316, incrémente la variable Oct d'une unité et retourne à l'étape E313. Le processeur 11 effectue la boucle constituée des étapes E313 à E316 jusqu'à ce que la variable N soit égale à la variable Oct minorée de deux unités.

Si la variable N est égale à la variable Oct minorée de deux unités, le processeur 11 passe à l'étape suivante E317 qui consiste à vérifier si le troisième octet de cette trame de données est égal à la valeur 03H en hexadécimal. Dans la négative, le processeur 11 passe à l'étape E319 et entre dans une procédure d'application des fonctionnalités.

La procédure d'application des fonctionnalités consiste par exemple à générer de nouvelles trames de données pour obtenir les caractéristiques des fonctionnalités communes entre le terminal de télécommunication 10 et le serveur 20 ou le combiné téléphonique 33. La procédure d'application des fonctionnalités consiste par exemple à générer, en réponse à de nouvelles trames V23 émises par le serveur 20, des signaux DTMF représentatifs des caractéristiques d'une fonctionnalité prédéterminée. La procédure d'application des fonctionnalités consiste par exemple à activer les fonctionnalités dont le terminal de télécommunication 10 dispose et qui sont identiques aux fonctionnalités déterminées à l'étape E314. Dans un mode préféré de réalisation, le processeur 11 commande en outre l'affichage sur l'écran 15 du terminal de télécommunication 10 de la liste des fonctionnalités communes avec celles du terminal de télécommunication 33 ou le serveur 20 avec lequel le terminal de télécommunication 10 est en communication.

Si le troisième octet de cette trame de données est égal à la valeur 03H en hexadécimal, le processeur 11 passe à l'étape E318 qui consiste à former une trame de données comprenant les caractéristiques du terminal de télécommunication et à transférer celle-ci. L'étape E318 sera décrite plus en détail en regard de la Fig. 4. La trame de données est formée conformément aux tableaux des Figs. 6 et 7 qui seront décrites ultérieurement. Lorsque la trame de données formée est transmise, le processeur 11 arrête le présent algorithme.

La Fig. 4 représente l'algorithme exécuté par le terminal de télécommunication lorsque celui-ci transmet une trame de données comprenant des informations représentatives des fonctionnalités dont il dispose.

Selon cet algorithme, le terminal de télécommunication 10, 20 ou 33 forme une trame de données comprenant des informations représentatives des fonctionnalités dont le terminal de télécommunication 10, 20, ou 33 dispose.

Le présent algorithme est décrit lorsqu'il est exécuté par le terminal de télécommunication 10. Bien entendu, celui-ci est exécuté de manière similaire par les terminaux de télécommunication 20 et 33.

A l'étape E400, le processeur 11 met le premier octet de la trame de données en cours de formation à la valeur 41H en hexadécimal. Cette valeur correspond à une information pour le transfert d'informations représentatives de fonctionnalités d'un terminal de télécommunication.

Cette opération effectuée, le processeur 11 met à l'étape E401 le troisième octet de la trame de données en cours de formation à la valeur 02H ou 03H en hexadécimal. La valeur 02H correspond à l'indication que la trame de données transmise par le terminal de télécommunication 10 comprend la liste des fonctionnalités dont dispose le terminal de télécommunication 10. La valeur 03H correspond à l'indication que la trame de données transmise par le terminal de télécommunication 10, comprend la liste des fonctionnalités dont dispose le terminal de télécommunication 10 ainsi qu'une requête pour l'obtention en réponse à la trame de données en formation des fonctionnalités dont dispose le terminal de télécommunication 33 ou le serveur 20 avec lequel le terminal de télécommunication 10 est en communication. A titre d'exemple, le processeur 11 met le troisième octet à la valeur 02H lorsque la formation de la trame de données est effectuée aux étapes E310 et E318.

Le processeur 11 met à l'étape E402 le quatrième octet de la trame de données en cours de formation à la valeur correspondante à une première fonctionnalité dont dispose le terminal de télécommunication 10. Cette valeur est déterminée à l'aide de la table telle que représentée en Fig. 7.

Cette opération effectuée, le processeur 11 met à l'étape E403 la variable K à la valeur 2 et à l'étape E404 la variable Oct à la valeur 5.

Le processeur 11 vérifie à l'étape E405 si le terminal de télécommunication 10 dispose d'autres fonctionnalités.

Dans la négative, le processeur 11 passe à l'étape E408 et met l'octet ayant la position Oct dans la trame de données en cours de formation à la valeur correspondante à une autre fonctionnalité supportée par le terminal de télécommunication 10. Cette valeur est déterminée à l'aide de la table telle que représentée en Fig. 7.

A l'étape suivante E409, le processeur 11 incrémente les variables K et Oct d'une unité et retourne à l'étape E405 précédemment décrite. Le processeur 11 exécute la boucle constituée des étapes E405, E408 et E409 tant que des informations représentatives de chacune des fonctionnalités du terminal de télécommunication 10 n'ont pas été insérées dans la trame de données.

Si à l'étape E405, le processeur 11 détermine que des informations représentatives de chacune des fonctionnalités du terminal de télécommunication 10 ont été insérées dans la trame de données, le processeur 11 passe à l'étape E406.

A cette étape, le processeur 11 met le second octet de la trame de données en cours de formation à la valeur hexadécimale de la variable K.

Cette opération effectuée, le processeur 11 transfère à l'étape E407 la trame de données ainsi formée.

Il est à remarquer que la trame de données ainsi formée est traitée par le moyen de détection/génération de trames V23 et de signaux DTMF 14 de manière à ce que celle-ci soit conforme aux règles définies dans le protocole de transmission V23 normalisé à L'ETSI.

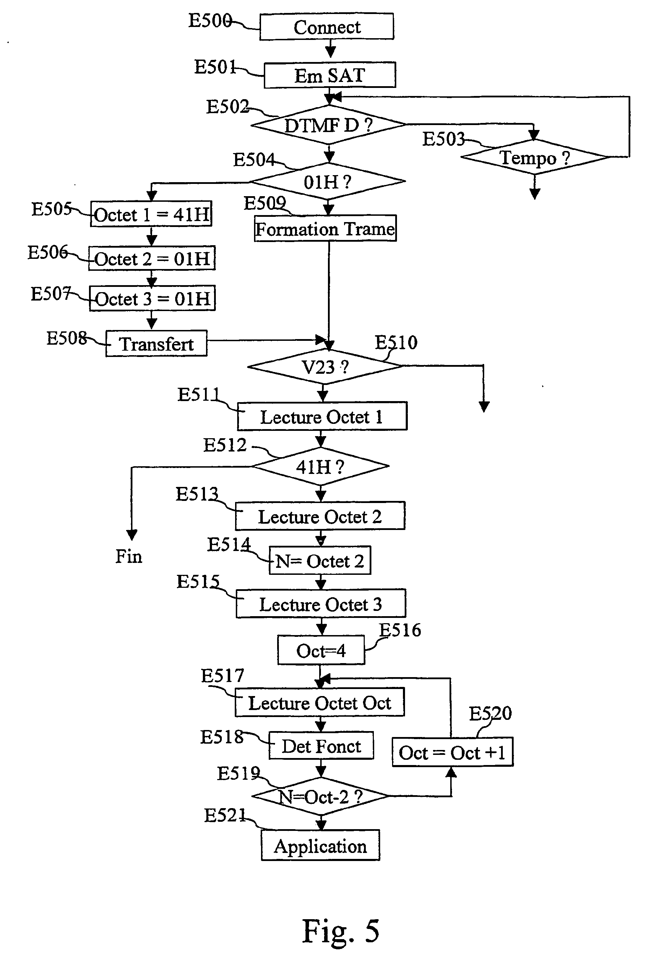

La Fig. 5 représente l'algorithme exécuté par le terminal de télécommunication selon l'invention lorsque celui-ci transmet un signal bifréquence.

L'algorithme de la Fig. 5 est exécuté par un terminal de télécommunication 10, 20 ou 33 à la réception d'un appel téléphonique issu d'un autre terminal de télécommunication.

L'algorithme de la Fig. 5 est décrit lorsqu'il est exécuté par le serveur 20. Bien entendu, le présent algorithme s'exécute de la même manière lorsqu'il est exécuté par le terminal de télécommunication 10 ou 33.

A l'étape E500, un appel issu du terminal de télécommunication 10 est détecté. Le serveur 20 établit alors une communication avec le terminal de télécommunication 10 appelant.

Cette étape effectuée, le serveur 20, à l'étape E501, commande la génération d'un signal SAT à destination du terminal de télécommunication appelant 10.

Le signal SAT est un signal bifréquence (2130Hz et 2750 Hz) qui est transmis sur un temps TSAT compris entre 80 et 85 millisecondes (ms). Ce signal est transmis par le serveur 20 par l'intermédiaire du réseau de télécommunication 30.

A la suite de l'envoi du message SAT, le serveur 20 passe à l'étape E502 qui consiste à vérifier si un signal de réponse DTMF D a été reçu en réponse au signal SAT transmis à l'étape E501 par l'intermédiaire du réseau de télécommunication 30.

Dans la négative, le serveur 20 passe à l'étape E503 qui consiste à vérifier si la temporisation allouée pour la réception du signal de réponse DTMF D est écoulée ou non. Le délai alloué pour la réception du signal de réponse DTMF D suite à l'envoi du message SAT est par exemple de 200 ms. Si ce délai n'est pas écoulé, le serveur 20 retourne à l'étape E502 précédemment décrite. Le serveur 20 effectue la boucle constituée des étapes E502 et E503 tant qu'un signal de réponse DTMF D n'a pas été reçu ou que la temporisation allouée pour la réception du signal de réponse DTMF D n'est pas écoulée.

Si la temporisation est écoulée, cela veut dire que le terminal de télécommunication 10 ne dispose pas d'un moyen de génération de détection de trames V23. Le serveur 20 arrête le présent algorithme.

Si un signal de réponse DTMF D a été reçu, le serveur 20 passe alors à l'étape E504.

A cette étape, le serveur 20 détermine le type de trame pour le transfert des fonctionnalités qui doit être généré. En effet, trois types de trames de données peuvent être générés selon l'invention. Un premier type de trame de données est représentatif d'une requête de transfert des fonctionnalités dont dispose le terminal de télécommunication recevant la trame de données. Un second type de trame de données comprend les fonctionnalités du terminal de télécommunication émettant la trame de données et un troisième type de trame de données comprend les fonctionnalités du terminal de télécommunication émettant la trame de données ainsi qu'une requête de transfert des fonctionnalités dont dispose le terminal de télécommunication recevant la trame de données. Le type de trame de données devant être généré est prédéterminé ou déterminé par l'opérateur du terminal de télécommunication générant la trame de données.

Si une trame de données de type requête de fonctionnalités doit être générée, le serveur 20 passe à l'étape E505.

A cette étape, le premier octet de la trame de données est mis à la valeur 41H. Le serveur 20 met le second octet et le troisième octet de la trame de données à la valeur 01H respectivement aux étapes E506 et E507. La trame de données V23 ainsi formée est ensuite transférée à l'étape E508 au terminal de télécommunication 10 par l'intermédiaire du réseau de télécommunication 30.

Lorsque le transfert de la trame de données est effectué, le serveur 20 passe à l'étape E510 qui sera décrite ultérieurement.

Si la trame de données est du type comprenant les fonctionnalités du serveur 20 ou du type comprenant les fonctionnalités du serveur 20 ainsi qu'une requête de transfert des fonctionnalités dont dispose le terminal de télécommunication 10 recevant la trame de données, le serveur 20 passe de l'étape E504 à E509.

A l'étape E509, le serveur 20 forme une trame de données V23 et transfère celle-ci conformément à l'algorithme tel que décrit à la Fig. 4. Selon le type de trame de données, le troisième octet de la trame de données est mis à la valeur 02H ou 03H en hexadécimal. Le serveur 20 passe ensuite à l'étape E510.

A l'étape E510, le serveur 20 vérifie si une trame de données V23 est reçue en réponse à la trame de données transférée à l'étape E509 ou à l'étape E508.

Si aucune trame de données n'est reçue pendant un temps prédéterminé, le serveur 20 arrête le présent algorithme. Si une trame de données V23 est reçue, le serveur 20 passe à l'étape E511.

A cette étape, le serveur 20 lit le premier octet de la trame de données reçue et vérifie à l'étape E512 si celui-ci est égal à la valeur 41H en hexadécimal.

Si le premier octet n'est pas égal à la valeur 41H, le serveur 20 arrête le présent algorithme. Si le premier octet de cette trame de données est égal à la valeur 41H en hexadécimal, le serveur 20 continue l'analyse de la trame de données, et à l'étape E513 lit le second octet de la trame de données reçue.

Le serveur 200 met à l'étape E514 la variable N à la valeur du second octet. Cette opération effectuée, le serveur 20 passe à l'étape E515 et lit le troisième octet de la trame de données reçue.

Le serveur 20 passe à l'étape E516 et met la variable Oct à la valeur 4. La variable Oct représente l'ordre dans la trame de données de l'octet à lire.

A l'étape suivante E517, le serveur 20 lit l'octet de la trame de données ayant la position égale à la variable Oct.

Le serveur 20 détermine à l'étape suivante E518, la fonctionnalité associée à l'octet lu à l'étape précédente. La fonctionnalité associée est déterminée à l'aide de la table telle que représentée en Fig. 7 et mémorisée dans la mémoire du serveur 20.

Cette opération effectuée, le serveur 20 passe à l'étape suivante E519 et vérifie si la variable N est égale à la variable Oct minorée de deux unités. Par cette vérification, le serveur 20 est apte à déterminer si le terminal de télécommunication 10 dispose d'autres fonctionnalités.

Dans la négative, le serveur 20 passe à l'étape E520, incrémente la variable Oct d'une unité et retourne à l'étape E517. Le serveur 20 effectue la boucle constituée des étapes E517 à E520 jusqu'à ce que la variable N soit égale à la variable Oct minorée de deux unités.

Si la variable N est égale à la variable Oct minorée de deux unités, le serveur 20 passe à l'étape E521 et entre dans une procédure d'application des fonctionnalités.

La procédure d'application des fonctionnalités consiste par exemple à générer de nouvelles trames de données pour obtenir les caractéristiques des fonctionnalités communes entre le terminal de télécommunication 10 et le serveur 20. La procédure d'application des fonctionnalités consiste par exemple à générer, en réponse à de nouvelles trames V23 émises par le terminal de télécommunication 10, des signaux DTMF représentatifs des caractéristiques d'une fonctionnalité prédéterminée. La procédure d'application des fonctionnalités consiste par exemple à activer les fonctionnalités dont le serveur 20 dispose et qui sont identiques aux fonctionnalités déterminées à l'étape E518.

Cette opération effectuée, le serveur 20 arrête le présent algorithme.

La Fig. 6 représente une table comprenant les différents éléments d'une trame de données V23 émise selon l'invention par un terminal de télécommunication.

La trame de données V23 est formée par le terminal de télécommunication 10 à l'étape E310 ou à l'étape E318 de l'algorithme de la Fig. 3 et est reçue par le serveur 20 à l'étape E510 de la Fig. 5. La trame de données V23 est formée par le serveur 20 à l'étape E509 ou aux étapes E505 à E507 de la Fig.5 et reçue par le terminal de télécommunication 10 à l'étape E303 de la Fig. 3.

La table de la Fig. 6 est constituée de quatre colonnes notées 601 à 604 et de neuf lignes 611 à 617.

La colonne 601 contient le numéro de l'octet dans la trame de données V23 considérée, la colonne 602 contient la valeur binaire de l'octet considéré, la colonne 603 contient la valeur hexadécimale de l'octet considéré et la colonne 604 la signification de l'octet considéré.

Le premier octet en ligne 611 a une valeur binaire de 0100 0001 soit 41H en hexadécimal. La valeur de cet octet correspond à une information pour le transfert de fonctionnalités d'au moins un terminal de télécommunication. Ains,i selon l'invention, un terminal de télécommunication à la réception d'une trame de données comprenant un tel premier octet est informé que la trame de données correspond à une information pour le transfert des fonctionnalités dont dispose le terminal de télécommunication ayant émis la trame de données et/ou pour le transfert des fonctionnalités dont dispose le terminal de télécommunication recevant la trame de données.

Le second octet en ligne 612 définit la longueur des paramètres compris dans la trame de données, en l'occurrence le nombre d'octets de la trame de données V23 situés après le second octet.

Le troisième octet en lignes 613a à 613c définit le type de trame de données pour le transfert de fonctionnalités. En effet, trois types de trames de données peuvent être générés.

Si le troisième octet représenté à la ligne 613a a une valeur binaire de 0000 0001 soit 01H en hexadécimal, la trame de données est représentative d'une requête pour le transfert, par le terminal de télécommunication recevant la trame de données, des fonctionnalités dont il dispose.

Si le troisième octet représenté à la ligne 613b a une valeur binaire de 0000 0010 soit 02H en hexadécimal, la trame de données comprend les fonctionnalités du terminal de télécommunication ayant émis la trame de données.

Si le troisième octet représenté à la ligne 613c a une valeur binaire de 0000 0011 soit 03H en hexadécimal, la trame de données est représentative d'une requête pour le transfert, par le terminal de télécommunication recevant la trame de données, des fonctionnalités dont il dispose et la trame de données comprend aussi les fonctionnalités du terminal de télécommunication ayant émis la trame de données.

Les lignes 614 à 617 représentent les différents octets représentatifs des fonctionnalités du terminal de télécommunication émettant la trame de données.

Le nombre d'octets varie selon le nombre de fonctionnalités dont dispose le terminal de télécommunication émettant la trame de données. Préférentiellement, chaque octet est représentatif d'une fonctionnalité du terminal de télécommunication émettant la trame de données. Ces fonctionnalités seront décrites plus en détail en référence à la Fig. 7

La Fig. 7 représente une table résumant les informations représentatives des différentes fonctionnalités incluses dans la trame de données V23 de la Fig. 6.

La table de la Fig. 7 est constituée de trois colonnes notées 701 à 703 et de dix lignes notées 711 à 720.

La colonne 701 la valeur binaire de l'octet considéré, la colonne 702 contient la valeur hexadécimale de l'octet considéré et la colonne 703 contient la fonctionnalité correspondant à l'octet considéré.

La ligne 711 indique que la valeur binaire 0000 0000 ou 00H en hexadécimal n'est pas représentative d'une fonctionnalité d'un terminal de télécommunication. Cette valeur 00H n'est pas utilisée selon la présente invention.

La ligne 712 indique que la valeur binaire 0000 0001 ou 01H en hexadécimal est représentative dé l'aptitude du terminal de télécommunication à traiter des messages écrits doublant des messages vocaux.

La ligne 713 indique que la valeur binaire 0000 0010 ou 02H en hexadécimal est représentative de l'aptitude du terminal de télécommunication à effectuer au moins une numérotation automatique suite à la réception d'un signal de commande et d'au moins un numéro de téléphone.

La ligne 714 indique que la valeur binaire 0000 0011 ou 03H en hexadécimal est représentative de l'aptitude du terminal de télécommunication à traiter des signaux vocaux selon un mode de traitement amélioré.

La ligne 715 indique que la valeur binaire 0000 0100 ou 04H en hexadécimal est représentative de l'aptitude du terminal de télécommunication à traiter des messages courts de type SMS.

La ligne 716 indique que la valeur binaire 0000 0101 ou 05H en hexadécimal est représentative de l'aptitude du terminal de télécommunication à traiter des messages courts de type EMS.

La ligne 717 indique que la valeur binaire 0000 0110 ou 06H en hexadécimal est représentative de l'aptitude du terminal de télécommunication à traiter des messages courts de type MMS.

La ligne 718 indique que la valeur binaire 0000 0111 ou 07H en hexadécimal est représentative de l'appartenance du terminal de télécommunication à une classe de terminaux prédéterminés par exemple disposant d'un ensemble de fonctionnalités prédéterminé. Il est à remarquer qu'en variante de réalisation un ou plusieurs octets peuvent être utilisés pour distinguer l'appartenance à une classe lorsqu'il existe plusieurs classes possibles.

La ligne 719 indique que la valeur binaire 0000 1000 ou 08H en hexadécimal est représentative de l'aptitude du terminal de télécommunication à traiter des coordonnées de correspondant et /ou de transférer des coordonnées sous la forme de cartes de visite électroniques. Ces cartes de visite électroniques sont préférentiellement de type Vcard.

La ligne 720 indique que la valeur binaire 0000 1001 ou 09H en hexadécimal est représentative de l'aptitude du terminal de télécommunication à synchroniser le répertoire téléphonique qu'il mémorise avec un autre répertoire téléphonique mémorisé dans un serveur du réseau de télécommunication 30.

Bien entendu, la présente invention n'est nullement limitée aux modes de réalisation décrits ici, mais englobe, bien au contraire, toute variante à la portée de l'homme du métier.

## Revendications

1. Procédé de transfert d'informations entre deux terminaux de télécommunication (10, 20, 33) en communication l'un avec l'autre par l'intermédiaire d'un réseau de télécommunication (30), chaque terminal de télécommunication disposant de fonctionnalités, **caractérisé en ce qu'**un des terminaux de télécommunication transfère (E310, E318) vers l'autre terminal de télécommunication une trame de données incluant au moins :
- une première information représentative d'un transfert d'informations représentatives de fonctionnalités,
- une seconde information représentative de la taille de la trame de données, et
- une troisième information représentative :
- d'un transfert des fonctionnalités du terminal de télécommunication transférant la trame de données, ou
- d'une invitation à transférer les fonctionnalités du terminal de télécommunication recevant la trame de données, ou
- d'un transfert des fonctionnalités du terminal de télécommunication transférant la trame de données et d'une invitation à transférer les fonctionnalités du terminal de télécommunication recevant la trame de données.

2. Procédé selon la revendication 1, **caractérisé en ce que** lesdites première, seconde et troisième informations sont respectivement contenues dans des premier, second et troisième octets de ladite trame de données.

3. Procédé selon la revendication 1, **caractérisé en ce que** la trame de données est une trame de données conforme au protocole V23.

4. Procédé selon la revendication 1 ou 2, **caractérisé en ce que** si les informations sont représentatives des fonctionnalités du terminal de télécommunication transférant la trame de données, la trame de données comporte en outre des octets dont les valeurs sont représentatives des fonctionnalités du terminal de télécommunication.

5. Procédé selon la revendication 1, **caractérisé en ce que** si les informations représentatives des fonctionnalités à transférer sont représentatives des fonctionnalités du terminal de télécommunication recevant la trame de données, le procédé comporte en outre une étape de transfert, par le terminal de télécommunication recevant la trame de données, d'une trame de données comprenant les fonctionnalités du terminal de télécommunication recevant la trame de données.

6. Procédé selon la revendication 4 ou 5, **caractérisé en ce que** les fonctionnalités sont des fonctionnalités de traitement de messages écrits et/ou de composition automatique d'au moins un numéro de téléphone et/ou de modification du signal audio reçu par le terminal de télécommunication et/ou de traitement de messages de service et/ou d'appartenance à une classe prédéterminée de terminaux de télécommunication et/ou de traitement de carte de visite électroniques et/ou de synchronisation du répertoire de correspondants du terminal de télécommunication avec un autre répertoire de correspondant distant.

7. Procédé selon l'une quelconque des revendications 1 à 6, **caractérisé en ce que** le réseau de télécommunication est un réseau téléphonique commuté et **en ce que** les terminaux de télécommunication sont des combinés téléphoniques ou un des terminaux de télécommunication est un serveur du réseau de télécommunication.

8. Terminal de télécommunication en communication avec un autre terminal de télécommunication par l'intermédiaire d'un réseau de télécommunication, chaque terminal de télécommunication disposant de fonctionnalités, **caractérisé en ce que** le terminal de télécommunication comporte des moyens de transfert vers l'autre terminal de télécommunication d'une trame de données incluant au moins :
- une première information représentative d'un transfert d'informations représentatives de fonctionnalités,
- une seconde information représentative de la taille de la trame de données, et
- une troisième information représentative :
- d'un transfert des fonctionnalités du terminal de télécommunication transférant la trame de données, ou
- d'une invitation à transférer les fonctionnalités du terminal de télécommunication recevant la trame de données, ou
- d'un transfert des fonctionnalités du terminal de télécommunication transférant la trame de données et une invitation à transférer les fonctionnalités du terminal de télécommunication recevant la trame de données.

9. Terminal selon la revendication 8, **caractérisé en ce que** lesdites première, seconde et troisième informations sont respectivement contenues dans des premier, second et troisième octets de ladite trame de données.

10. Signal transmis sur un réseau de télécommunication par un terminal de télécommunication en communication avec un autre terminal de télécommunication, chaque terminal de télécommunication disposant de fonctionnalités, **caractérisé en ce que** le signal comporte au moins une trame de données incluant au moins :
- un premier octet dont la valeur est représentative d'un transfert d'informations représentatives de fonctionnalités,
- un second octet dont la valeur est représentative de la taille de la trame de données, et
- un troisième octet dont la valeur est représentative :
- d'un transfert des fonctionnalités du terminal de télécommunication transférant la trame de données, ou
- d'une invitation à transférer les fonctionnalités du terminal de télécommunication recevant la trame de données, ou
- d'un transfert des fonctionnalités du terminal de télécommunication transférant la trame de données et une invitation à transférer les fonctionnalités du terminal de télécommunication recevant la trame de données.

11. Programme d'ordinateur stocké sur un support d'informations, ledit programme comportant des instructions permettant de mettre en oeuvre le procédé selon l'une quelconque des revendications 1 à 7, lorsqu'il est chargé et exécuté par un système informatique.

## Claims

1. Method for transferring information items between two telecommunication terminals (10, 20, 33) in communication with one another via a telecommunication network (30), each telecommunication terminal having functionalities, **characterized in that** one of the telecommunication terminals transfers (E310, E318) to the other telecommunication terminal a data frame including at least:
- a first information item representative of a transfer of information items representative of functionalities,
- a second information item representative of the size of the data frame, and
- a third information item representative:
- of a transfer of the functionalities of the telecommunication terminal transferring the data frame, or
- of an invitation to transfer the functionalities of the telecommunication terminal receiving the data frame, or
- of a transfer of the functionalities of the telecommunication terminal transferring the data frame and of an invitation to transfer the functionalities of the telecommunication terminal receiving the data frame.

2. Method according to Claim 1, **characterized in that** said first, second and third information items are respectively contained in first, second and third bytes of said data frame.

3. Method according to Claim 1, **characterized in that** the data frame is a data frame conforming to the V.23 protocol.

4. Method according to Claim 1 or 2, **characterized in that** if the information items are representative of the functionalities of the telecommunication terminal transferring the data frame, the data frame also includes bytes whose values are representative of the functionalities of the telecommunication terminal.

5. Method according to Claim 1, **characterized in that** if the information items representative of the functionalities to be transferred are representative of the functionalities of the telecommunication terminal receiving the data frame, the method also includes a step for transfer, by the telecommunication terminal receiving the data frame, of a data frame comprising the functionalities of the telecommunication terminal receiving the data frame.

6. Method according to Claim 4 or 5, **characterized in that** the functionalities are functionalities for processing written messages and/or for automatically dialling at least one telephone number and/or for modifying the audio signal received by the telecommunication terminal and/or for processing service messages and/or concerning belonging to a predetermined class of telecommunication terminals and/or for electronic business card processing and/or for synchronizing the contact list of the telecommunication terminal with another remote contact list.

7. Method according to any one of Claims 1 to 6, **characterized in that** the telecommunication network is a switched telephone network and **in that** the telecommunication terminals are telephone handsets or one of the telecommunication terminals is a server of the telecommunication network.

8. Telecommunication terminal in communication with another telecommunication terminal via a telecommunication network, each telecommunication terminal having functionalities, **characterized in that** the telecommunication terminal includes means for transferring to the other telecommunication terminal a data frame including at least:
- a first information item representative of a transfer of information items representative of functionalities,
- a second information item representative of the size of the data frame, and
- a third information item representative:
- of a transfer of the functionalities of the telecommunication terminal transferring the data frame, or
- of an invitation to transfer the functionalities of the telecommunication terminal receiving the data frame, or
- of a transfer of the functionalities of the telecommunication terminal transferring the data frame and an invitation to transfer the functionalities of the telecommunication terminal receiving the data frame.

9. Terminal according to Claim 8, **characterized in that** said first, second and third information items are respectively contained in first, second and third bytes of said data frame.

10. Signal transmitted over a telecommunication network by a telecommunication terminal in communication with another telecommunication terminal, each telecommunication terminal having functionalities, **characterized in that** the signal comprises at least one data frame including at least:
- a first byte whose value is representative of a transfer of information items representative of functionalities,
- a second byte whose value is representative of the size of the data frame, and
- a third byte whose value is representative:
- of a transfer of the functionalities of the telecommunication terminal transferring the data frame, or
- of an invitation to transfer the functionalities of the telecommunication terminal receiving the data frame, or
- of a transfer of the functionalities of the telecommunication terminal transferring the data frame and an invitation to transfer the functionalities of the telecommunication terminal receiving the data frame.

11. Computer program stored on an information medium, said program comprising instructions for implementing the method according to any one of Claims 1 to 7, when it is loaded and executed by a computer system.

## Patentansprüche

1. Verfahren zur Übertragung von Informationen zwischen zwei miteinander über ein Telekommunikationsnetz (30) in Verbindung stehenden Telekommunikationsendgeräten (10, 20, 33), wobei jedes Telekommunikationsendgerät über Funktionalitäten verfügt, **dadurch gekennzeichnet, dass** eines der Telekommunikationsendgeräte zum anderen Telekommunikationsendgerät einen Datenrahmen überträgt (E310, E318), der mindestens umfasst:
- eine erste Information, die für eine Übertragung von für Funktionalitäten repräsentativen Informationen repräsentativ ist,
- eine zweite Information, die für die Größe des Datenrahmens repräsentativ ist, und
- eine dritte Information, die repräsentativ ist für:
- eine Übertragung der Funktionalitäten des den Datenrahmen übertragenden Telekommunikationsendgeräts, oder
- eine Aufforderung, die Funktionalitäten des den Datenrahmen empfangenden Telekommunikationsendgeräts zu übertragen, oder
- eine Übertragung der Funktionalitäten des den Datenrahmen übertragenden Telekommunikationsendgeräts und eine Aufforderung, die Funktionalitäten des den Datenrahmen empfangenden Telekommunikationsendgeräts zu übertragen.

2. Verfahren nach Anspruch 1, **dadurch gekennzeichnet, dass** die ersten, zweiten und dritten Informationen in ersten, zweiten bzw. dritten Bytes des Datenrahmens enthalten sind.

3. Verfahren nach Anspruch 1, **dadurch gekennzeichnet, dass** der Datenrahmen ein Datenrahmen gemäß dem Protokoll V23 ist.

4. Verfahren nach Anspruch 1 oder 2, **dadurch gekennzeichnet, dass**, wenn die Informationen für die Funktionalitäten des den Datenrahmen übertragenden Telekommunikationsendgeräts repräsentativ sind, der Datenrahmen außerdem Bytes aufweist, deren Werte für die Funktionalitäten des Telekommunikationsendgeräts repräsentativ sind.

5. Verfahren nach Anspruch 1, **dadurch gekennzeichnet, dass**, wenn die für die zu übertragenden Funktionalitäten repräsentativen Informationen für die Funktionalitäten des den Datenrahmen empfangenden Telekommunikationsendgeräts repräsentativ sind, das Verfahren außerdem einen Schritt der Übertragung, durch das den Datenrahmen empfangende Telekommunikationsendgerät, eines Datenrahmens aufweist, der die Funktionalitäten des den Datenrahmen empfangenden Telekommunikationsendgeräts enthält.

6. Verfahren nach Anspruch 4 oder 5, **dadurch gekennzeichnet, dass** die Funktionalitäten Funktionalitäten der Verarbeitung von schriftlichen Mitteilungen und/oder eines automatischen Wählens mindestens einer Telefonnummer und/oder einer Änderung des vom Telekommunikationsendgerät empfangenen Audiosignals und/oder der Verarbeitung von Dienstmitteilungen und/oder der Zugehörigkeit zu einer vorbestimmten Klasse von Telekommunikationsendgeräten und/oder der Verarbeitung einer elektronischen Visitenkarte und/oder der Synchronisation des Teilnehmerverzeichnisses des Telekommunikationsendgeräts mit einem anderen fernen Teilnehmerverzeichnis sind.

7. Verfahren nach einem der Ansprüche 1 bis 6, **dadurch gekennzeichnet, dass** das Telekommunikationsnetz ein Telefonwählnetz ist, und dass die Telekommunikationsendgeräte Telefonhörer sind, oder eines der Telekommunikationsendgeräte ein Server des Telekommunikationsnetzes ist.

8. Telekommunikationsendgerät, das über ein Telekommunikationsnetz mit einem anderen Telekommunikationsendgerät verbunden ist, wobei jedes Telekommunikationsendgerät über Funktionalitäten verfügt, **dadurch gekennzeichnet, dass** das Telekommunikationsendgerät Einrichtungen zur Übertragung zum anderen Telekommunikationsendgerät eines Datenrahmens aufweist, der mindestens umfasst:
- eine erste Information, die für eine Übertragung von für Funktionalitäten repräsentativen Informationen repräsentativ ist,
- eine zweite Information, die für die Größe des Datenrahmens repräsentativ ist, und
- eine dritte Information, die repräsentativ ist für:
- eine Übertragung der Funktionalitäten des den Datenrahmen übertragenden Telekommunikationsendgeräts, oder
- eine Aufforderung, die Funktionalitäten des den Datenrahmen empfangenden Telekommunikationsendgeräts zu übertragen, oder
- eine Übertragung der Funktionalitäten des den Datenrahmen übertragenden Telekommunikationsendgeräts und eine Aufforderung, die Funktionalitäten des den Datenrahmen empfangenden Telekommunikationsendgeräts zu übertragen.

9. Endgerät nach Anspruch 8, **dadurch gekennzeichnet, dass** die ersten, zweiten und dritten Informationen in ersten, zweiten bzw. dritten Bytes des Datenrahmens enthalten sind.

10. Signal, das in einem Telekommunikationsnetz von einem Telekommunikationsendgerät übertragen wird, das mit einem anderen Telekommunikationsendgerät verbunden ist, wobei jedes Telekommunikationsendgerät über Funktionalitäten verfügt, **dadurch gekennzeichnet, dass** das Signal mindestens einen Datenrahmen aufweist, der mindestens umfasst:
- ein erstes Byte, dessen Wert für eine Übertragung von für Funktionalitäten repräsentativen Informationen repräsentativ ist,
- ein zweites Byte, dessen Wert für die Größe des Datenrahmens repräsentativ ist, und
- ein drittes Byte, dessen Wert repräsentativ ist für:
- eine Übertragung der Funktionalitäten des den Datenrahmen übertragenden Telekommunikationsendgeräts, oder
- eine Aufforderung, die Funktionalitäten des den Datenrahmen empfangenden Telekommunikationsendgeräts zu übertragen, oder
- eine Übertragung der Funktionalitäten des den Datenrahmen übertragenden Telekommunikationsendgeräts und eine Aufforderung, die Funktionalitäten des den Datenrahmen empfangenden Telekommunikationsendgeräts zu übertragen.

11. Computerprogramm, das auf einem Informationsträger gespeichert ist, wobei das Programm Anweisungen aufweist, die es ermöglichen, das Verfahren nach einem der Ansprüche 1 bis 7 durchzuführen, wenn es von einem EDV-System geladen und ausgeführt wird.
